# EUROPEAN PATENT APPLICATION

(11) **EP 4 759 704 A1**
(43) Date of publication of application: **17.06.2026**
(21) Application number: 25223240.0
(22) Date of filing: 15.12.2025
(51) Int. Cl.: B64C 9/02, B64C 9/22, B64C 9/24

(54) **ENCLOSURE DEVICE**

(30) Priority: 16.12.2024 GB 202418406
(71) Applicant: Airbus Operations Limited, Bristol BS34 7PA (GB)
(72) Inventor: SAUVEN, James, Bristol,, BS34 7PA (GB)

(57) **Abstract**

Disclosed is an enclosure device configured to enclose a concave surface portion of an aerodynamic component of an aircraft wing. Disclosed also is, an aerodynamic component comprising an enclosure device, and an aircraft wing and aircraft comprising one or more enclosure devices. Also disclosed is a method of counteracting unwanted airflow circulation in a concave surface portion of an aerodynamic component of an aircraft wing.

## Description

### TECHNICAL FIELD

The present disclosure relates to an enclosure device configured to enclose a concave surface portion of an aerodynamic component of an aircraft wing. It further relates to an aerodynamic component comprising an enclosure device, aircraft wing and aircraft comprising one or more enclosure devices. The present disclosure also relates to a method of counteracting unwanted airflow circulation in a concave surface portion of an aerodynamic component of an aircraft wing.

### BACKGROUND

It is known for high lift device assemblies to comprise an aerodynamic component and a further aerodynamic component (for e.g. a wing leading edge slat device and a corresponding fixed leading edge portion, or a wing fixed trailing edge portion and a wing trailing edge flap device ) that are displacable relative to one another between a retracted and stowed position and one or more deployed positions as required to obtain a desired lift and drag configuration of a wing. In such assemblies, the aerodynamic component can often have an aft facing concave surface portion (otherwise referred to as a cavity, or 'cove') and the corresponding further aerodynamic component will have a corresponding forward facing convex portion, which is nestled within the concave portion when the aerodynamic components are held in a retracted position. When such assemblies are configured in the deployed position, the concave portion can induce circulating airflow within the concave portion, which is the source of aeroacoustic noise and aerodynamic drag, both of which are undesirable, especially in the context of commercial aircraft operations.

Various solutions are known to combat this outcome, whereby solid or shape adaptive filler devices are attached to the aerodynamic component in the region of the concave portion and configured to enclose the concave portion when the aerodynamic component is deployed.

Solutions that utilize solid materials often lead to a design where the aerodynamic component shape is optimised for the deployed position, but leads to space allocation issues and restriction to the overall design for the retracted position, leading to a suboptimal aerodynamic performance of the design overall. Furthermore, solid fillers can be heavy.

Shape adaptive filler solutions try to overcome the drawbacks of solid fillers by using filler devices that are formed from a solid material that either incorporate a degree of structural deformation in their design to adapt to a deformed state when in the retracted position or design for dynamic snap through buckling property of the filler device itself. While such solutions may be more optimal from an aerodynamic perspective, they are complex to design, often do not obtain an optimal shape of the filler device in the deployed position. Such solutions rely on structural load to be imparted on the filler device in order to deform it as required. The source of the structural load is a contact load between one of the aerodynamic components and the filler device. Such a mechanism ultimately requires higher structural loads to be imparted on the aerodynamic components and the filler device when the filler device is deformed in the retracted position, which results in the device and overall assembly being suboptimal in terms of wear, weight and cost to manufacture.

Aspects and embodiments of the present invention seek to mitigate these issues by providing a more optimised solution than what is provided for in the state of the art.

### SUMMARY

A first aspect of the present invention provides an enclosure device configured to enclose a concave surface portion of an aerodynamic component of an aircraft wing, the enclosure device comprising a pliable membrane extending along a spanwise direction and chordwise direction, the pliable membrane further comprising a first distal edge configured to be fixedly attached at a corresponding first distal portion of the aerodynamic component, and a second distal edge configured for being attached at a second corresponding distal portion of the aerodynamic component, wherein the pliable membrane is further configured to deform and substantially conform to a convex surface portion of a further aerodynamic component of an aircraft wing upon displacement of the aerodynamic component relative to the further aerodynamic component.

The pliable membrane may be formed from an elasticated material and the second distal edge may be configured for being fixedly attached at a second corresponding distal portion of the aerodynamic component.

Alternatively the second distal edge may be configured for being attached to biasing means provided at a second corresponding distal portion of the aerodynamic component, wherein the biasing device is configured to apply a tensile force to the pliable membrane.

The biasing means in this alternative embodiment may comprise a biased spool located at a second corresponding distal portion of the aerodynamic component, wherein the biased spool may be configured to wind the pliable membrane onto the spool. The pliable membrane in this alternative embodiment may be formed from a pliable yet substantially non-elastic material such as a mylar, nylon or polyester based material;

The pliable membrane may preferably comprise reinforcement material configured to limit deformation of the membrane in a spanwise direction, and the reinforcement material may comprise synthetic fibers such as carbon, aramid or glass based fibres.

The pliable membrane may comprise reinforcement elements configured to counteract spanwise bending of the pliable membrane, wherein these reinforcement elements may be provided by one or more battens.

The enclosure device may be provided for an aerodynamic component such a wing leading edge high lift device that is configured to displace relative to a further aerodynamic component in the form of a wing fixed leading edge portion.

Alternatively, the enclosure device may be provided for an aerodynamic component such as a wing fixed trailing edge portion that is configured to displace relative to a further aerodynamic component in the form of a wing trailing edge high lift device.

A second aspect of the present invention provides an aerodynamic component comprising an enclosure device according to any embodiment according to the first aspect of the present invention.

The aerodynamic component may comprise an enclosure device wherein the first or second distal edge of the pliable membrane is attached to an internal portion of the aerodynamic component and is routed to an external portion of the aerodynamic component via an elongate slot.

The pliable membrane may be supported on a low friction surface of the aerodynamic component that is configured to reduce friction forces acting on the pliable membrane.

The low friction surface may be formed from a nylon material or may further be provided by a roller mechanism attached to the aerodynamic component.

A third aspect of the present invention provides an aircraft wing assembly comprising aerodynamic component according to any embodiment according to the second aspect of the present invention, and a further aerodynamic component, wherein the aerodynamic component may be a leading edge high lift device, and the further aerodynamic component may be a wing fixed leading edge portion. Alternatively, the aerodynamic component may be a wing fixed trailing edge portion and the further aerodynamic component may be a wing trailing edge high lift device.

A fourth aspect of the present invention provides an aircraft comprising at least one wing assembly according to either embodiment according to the third aspect of the present invention.

A fifth aspect of the present invention provides a method of counteracting unwanted airflow circulation in a concave surface portion of an aerodynamic component of an aircraft thus far described, the method comprising the steps of providing an aircraft and displacing the aerodynamic component relative to the further aerodynamic component from a stowed position to a deployed position(s) in an airflow such that the pliable membrane of the enclosure device transitions from a deformed state to an undeformed state to substantially encloses a concave surface portion of an aerodynamic component of an aircraft wing such that the enclosure devices prevents the development of unwanted airflow circulation within the concave portion when the aerodynamic component is in the deployed position.

### BRIEF DESCRIPTION OF THE DRAWINGS

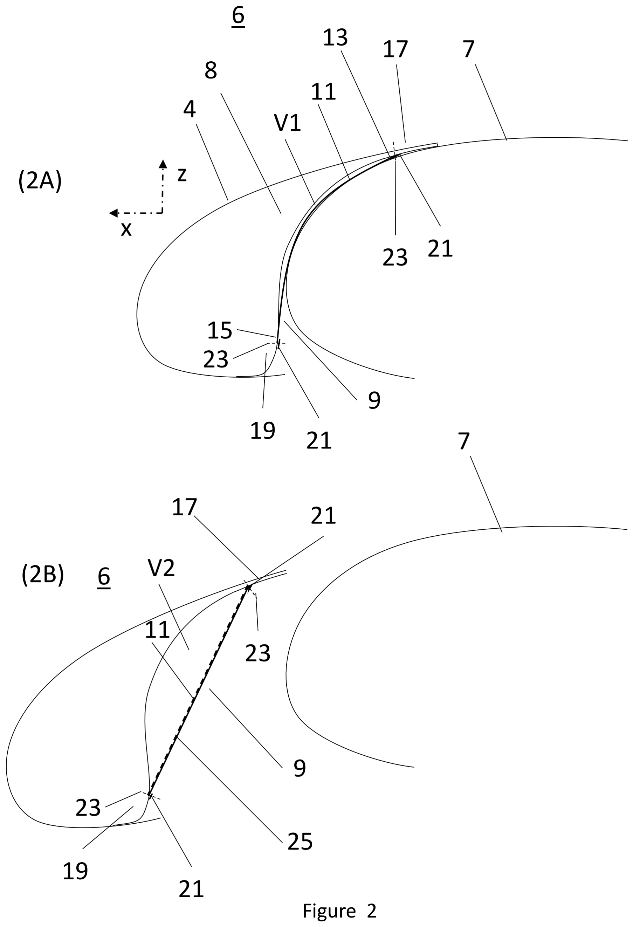

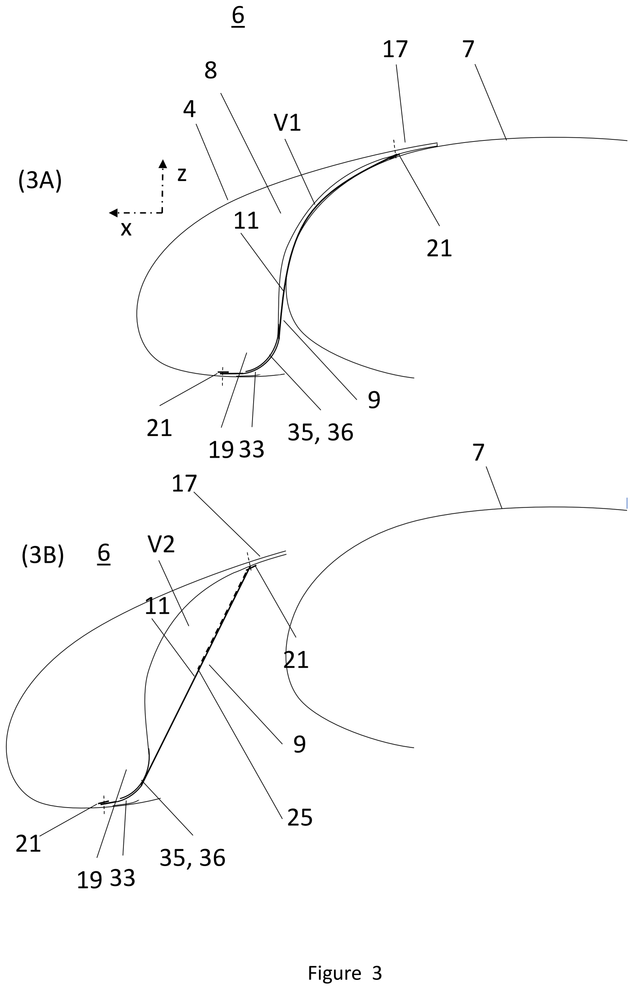

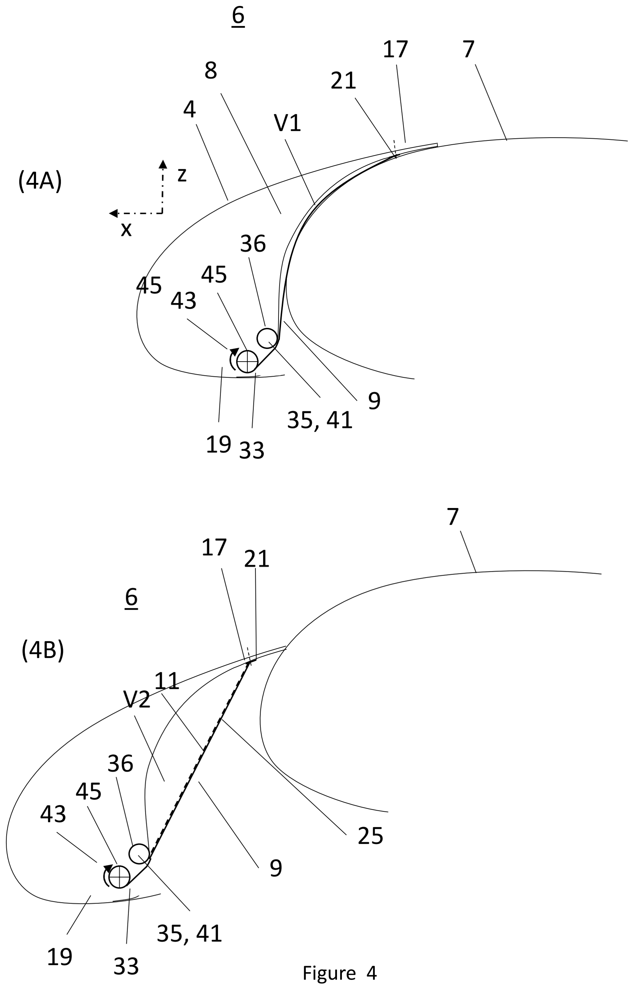

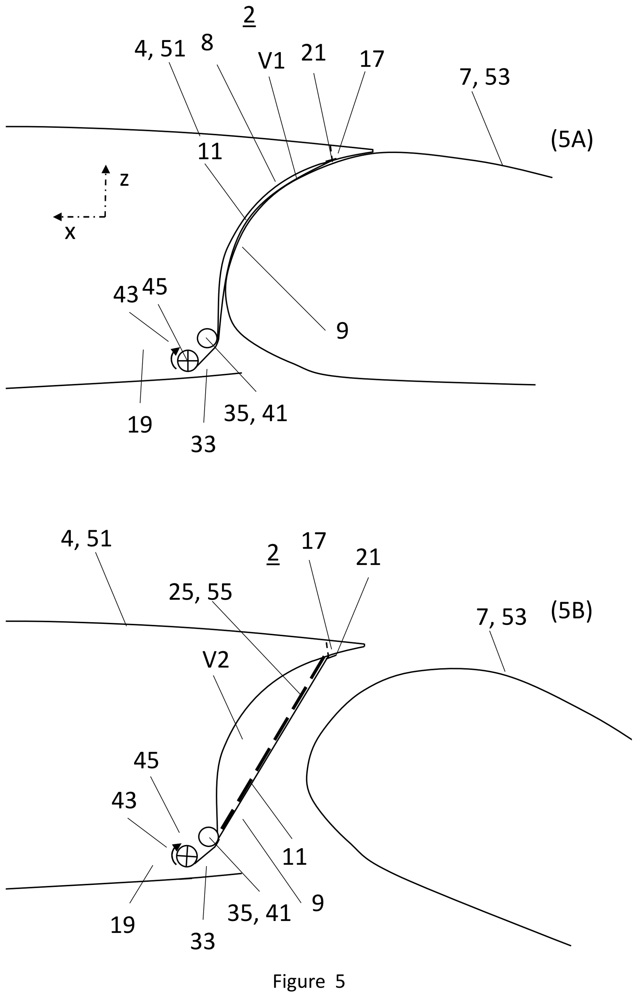

Embodiments of the invention will now be described, by way of example only, with reference to the accompanying drawings, in which:

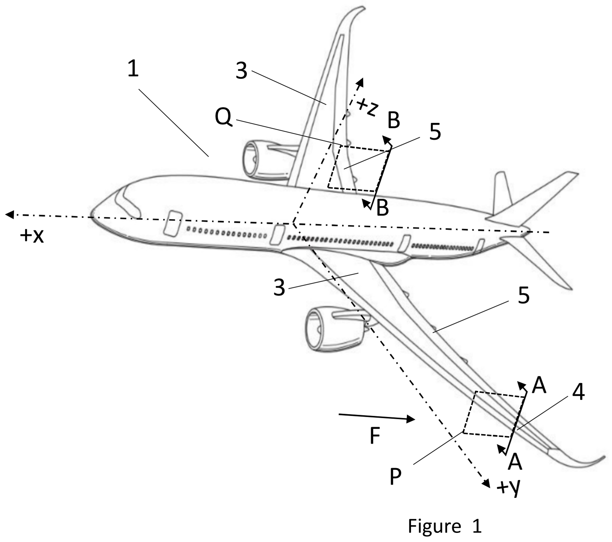

Figure 1 is a isometric schematic view of an aircraft according to embodiments of the present invention;
Section views 2A and 2B of Figure 2 are of a leading edge portion of a wing of the aircraft through line A-A of figure 1, showing a leading edge slat, a fixed leading edge portion and an enclosure device according to an embodiment of the present invention, wherein the slat is shown in a stowed (retracted) configuration in 2A, and in a deployed (extended) configuration in 2B;
Section views 3A and 3B of Figure 3 are further section views of a leading edge portion of a wing of the aircraft through line A-A of figure 1, showing a leading edge slat, a fixed leading edge portion and an enclosure device according to an embodiment of the present invention, wherein the slat is shown in a stowed (retracted) configuration in 3A, and in a deployed (extended) configuration in 3B;
Section views 4A and 4B of Figure 4 are further section views of a leading edge portion of a wing of the aircraft through line A-A of figure 1, showing a leading edge slat, a fixed leading edge portion and an enclosure device according to an embodiment of the present invention, wherein the slat is shown in a stowed (retracted) configuration in 4A, and in a deployed (extended) configuration in 4B;
Section views 5A and 5B of Figure 5 are further section views of a trailing edge portion of a wing of the aircraft through line B-B figure 1, showing a trailing edge flap, a fixed trailing edge portion and an enclosure device according to another embodiment of the present invention, wherein the flap is shown in a stowed configuration 5A and in a deployed (extended) configuration 5B.

### DETAILED DESCRIPTION

With reference to Figure 1 an aircraft 1 with a set of orthogonal aircraft reference axes is shown, where x is the aircraft longitudinal axis extending through the center of the fuselage, y is the aircraft spanwise (or lateral) axis extending orthogonal to the x axis, and z is the aircraft vertical axis extending orthogonal to both the x and y axes. The positive x direction shown is referred to as the forward direction, with the opposite negative x direction being the aft direction. Portions of components of aircraft assemblies that are more forward than other portions of the same component or assemblies they are part of are referred to as leading, whereas in the opposite sense they are referred to as trailing.

The aircraft 1 has a pair of wings 3 with each wing 3 provided with high lift devices extending predominantly in a spanwise direction along leading and trailing edges of each wing 3. The leading edge devices are slats 4 and the trailing edge devices are flaps 5. Other examples of high lift devices include krueger devices and flaperons.

During flight an airflow F impinges on the aircraft wings 3 in the direction shown. In the leading edge area of the wing assembly an exemplary section plane P passes parallel to the xz plane formed by the aircraft x and z axes, through the leading edge high lift assembly 6 of the wing 3. In the trailing edge area, an exemplary section plane Q passes parallel to the xz plane formed by the aircraft x and z axes through a trailing edge high lift assembly 2 of the wing.

With reference to figure 2, the leading edge high lift assembly 6 comprises an aerodynamic component 4 in the form of a slat that is movably connected by an actuation system (not shown) to a further aerodynamic component 7 in the form of a fixed leading edge wing portion. In operation the slat 4 is movable relative to the fixed leading edge 7 between at least a stowed configuration, shown in 2A and a deployed (or extended) configuration shown in 2B.

As can be seen, the slat 4 comprises a concave portion 8 (also known as a cavity or cove) on an aft side. The fixed leading edge portion 7 is generally convex in shape and extends in a forward direction. In the stowed configuration shown in 2A, the convex shaped fixed leading edge portion 7 is nestled within the concave portion 8 of the slat 4, such that the outer profile of the wing presents a singular airfoil shape (otherwise known as a wings clean configuration) that is optimised for aircraft cruise flight.

Also shown in 2A is an enclosure device 9 which in the present embodiment comprises a spanwise and chordwise extending elasticated pliable membrane 11, which is formed from latex in the present embodiment.

The elasticated pliable membrane 11 comprises a first and second distal edges 13, 15 fixedly attached to corresponding first and second distal portions 17, 19 of the slat 4 (aerodynamic component) at the external surface of the slat 4 at the concave portion 8, as shown.

The fixed attachment at the portions 17, 19 is provided by spanwise extending plates 21 that sandwich the pliable membrane 11 to the slat 4 and held in place by a series of flush headed fasteners 23 that extend along the length of each plate and pass through the plate 17, membrane 11 and into the slat 4.

In the stowed configuration shown in 2A, the pliable membrane 11 is in contact with the convex portion of the leading edge, which stretches the elasticated pliable membrane 11 by virtue of the displacement of the slat 4 relative to the fixed leading edge portion 7 as the slat 4 is displaced towards the stowed configuration. In this configuration the enclosure device 9 is deformed and substantially conforms to the surface of the convex portion of the fixed leading edge portion 7 and extends across a volumetric proportion V1 of the concave portion 8 of the slat 4 between the first and second distal portions 17, 19. Due to the elasticated nature of the membrane 11 and the wide contact area of the membrane 11 against the convex portion of the fixed leading edge portion 7, the contact loads imparted onto the fixed leading edge portion 7, and attachment loads imparted at the fixed attachment at the portions 17, 19 are substantially lower than compared to other known solutions. Furthermore, the enclosure device is able to comply with the desired optimal shaping of both aerodynamic components for the cruise condition, leading to an aerodynamic improvement compared to other known solutions such as solid fillers as mentioned previously.

When the same aerodynamic components 4 and 7 are displaced apart from each other to the deployed configuration shown in 2B, the pliable elastic membrane 11 of the enclosure device 9 gradually loses contact with the convex portion of the fixed leading edge portion 7, and contracts due to its inherent elastic properties. In the deployed configuration 2B it can be seen that the membrane extends across a larger volumetric proportion V2 of the concave portion 8 of the slat 4, when compared to the volumetric proportion V1 of the concave portion 8 enclosed when the aerodynamic components 4 and 7 are in the stowed configuration shown in 2A. The enclosure of a larger volumetric proportion of the concave portion 8 of the slat 4 along its length prevents the formation of circulating airflow within the concave portion 8, thereby preventing the source of aeroacoustic noise,

The enclosure device 9 of the embodiment of Figure 2 includes an elasticated pliable membrane 11 that comprises the optional feature of reinforcement material 25 in the form of spaced apart spanwise extending continuous glass fiber tows that are bound by the latex material of the pliable membrane 11.

The reinforcement material 25 may extend across the full chordwise length of the enclosure device 9 or alternatively only a portion of the chordwise length of the enclosure device 9. These features are represented in the position 2B. The reinforcement material 25 limits the deformation of the membrane 11 in the spanwise direction by increasing the tensile stiffness of the membrane orientated with a component in the spanwise direction, while also retaining the ability of the pliable membrane 11 to deform and conform as required in non-spanwise directions. Providing selective stiffening of the pliable membrane 11 may be advantageous as it may ensure better resistance of the membrane 11 to aerodynamic load induced deformation of the membrane in the deployed position 2B.

With reference to figure 3, an alternative embodiment of the present invention is presented with substantially the same features, function and options of the embodiment of figure 2, however with the difference of the present embodiment being that one of the fixed attachment at the portions 17, 19 is provided inside the structure of the slat 4 to an internal portion 31 of the slat 4. The attachment means remain the same. To facilitate such an internal attachment of the enclosure device 9, the elasticated pliable membrane 11 is routed via an elongate slot 33 as shown.

To prevent a hard edge contact between the pliable membrane 11 and the slat 4, a guide 35 with a curved guide surface 36 is provided. In the present embodiment the guide 35 is provided by a suitably curved structural portion of the slat 4 as shown. The guide 35 with the guide surface 36 may be coated with a low friction material such as PTFE or may additionally comprise a nylon material to allow a degree of deformation in the guide surface 36 if needed. The embodiment of figure 3 is advantageous in that the length of the elasticated membrane 11 may be increased to allow a pre-stretched condition of the membrane 11 in the deployed configuration 3B. It may alternatively be used when the dimension of the aerodynamic component (slat) 4 is relatively compact and low in aerodynamic thickness. It may alternatively be used when the convex shape of the fixed leading edge portion 7 is more blunt when compared to other embodiments.

With reference to figure 4, a further alternative embodiment of the present invention is presented with substantially the same features, function and options of the embodiment of figure 2 and 3, with the difference of the present embodiment being that only one fixed attachment is provided at a portion 17 external to the structure of the slat 4 similar to the embodiment of figure 3, a nylon roller 41 is provided as a guide element 35, and that the pliable membrane is not formed of an elasticated material, but instead it is attached to a biasing means 43 in the form of a biased sprung spool 45 configured to apply a stretching force to the pliable membrane 11 in the direction shown such that it gathers the pliable membrane 11 onto the spool 45 and such that it can deform and conform to the desired condition similar to the previous embodiments thus far described in the stowed and deployed configurations.

In the present embodiment, the pliable membrane 11 is formed from woven polyester material such as Dacron (^{™}), but it may be formed from any other suitable material such as mylar. Such materials may be better suited than elasticated pliable membranes in applications where higher aerodynamic pressure loading is envisaged, necessitating a more robust membrane design. It also includes reinforcement material 25 in the form of carbon fiber tows stitched into the pliable membrane 11 which have a higher specific tensile strength than their glass fiber counterparts, and are better suited for higher load applications.

With reference to figure 5, a further alternative embodiment of the present invention is presented with substantially the same features, function and options of the embodiment of figure 2, 3 and 4 previously described, with the main difference of the present embodiment being that the wing high lift assembly is a trailing edge high lift assembly 2 wherein the aerodynamic component 4 is a fixed trailing edge portion 51 of a wing 3 and the further aerodynamic component 7 being a trailing edge flap 53. As shown, the form and function of the enclosure device between the stowed configuration of 5A and deployed position of 5B is much the same as the embodiment of figure 4, however it should be appreciated that features of the embodiments of figure 2 and 3 may equally be applied. In the present embodiment the optional reinforcement material 25 is in the form of a plurality of battens 55, each batten 55 formed of a glass fiber tows in a cured polyester resin material. The function of the battens 55 is not only to limit deformation of pliable membrane 11 in a spanwise direction, but also counteract spanwise bending of the pliable membrane 11. The battens 55 may be used as reinforcement material in any of the previously described embodiments.

Although the invention has been described above with reference to one or more preferred examples or embodiments, it will be appreciated that various changes or modifications may be made without departing from the scope of the invention as defined in the appended claims.

Where the term "or" has been used in the preceding description, this term should be understood to mean "and/or", except where explicitly stated otherwise.

## Claims

1. Enclosure device configured to enclose a concave surface portion of an aerodynamic component of an aircraft wing, comprising
a pliable membrane extending along a spanwise direction and chordwise direction, the pliable membrane further comprising:
a first distal edge configured to be fixedly attached at a corresponding first distal portion of the aerodynamic component, and a second distal edge configured for being attached at a second corresponding distal portion of the aerodynamic component;
wherein the pliable membrane is further configured to deform and substantially conform to a convex surface portion of a further aerodynamic component of an aircraft wing upon displacement of the aerodynamic component relative to the further aerodynamic component;

2. Enclosure device of claim 1 wherein the pliable membrane is formed from an elasticated material and the second distal edge is configured for being fixedly attached at a second corresponding distal portion of the aerodynamic component;

3. Enclosure device of claim 1 wherein the second distal edge is configured for being attached to biasing means provided at a second corresponding distal portion of the aerodynamic component, wherein the biasing device is configured to apply a tensile force to the pliable membrane;

4. Enclosure device of claim 3 wherein the biasing means comprises a biased spool located at a second corresponding distal portion of the aerodynamic component, wherein the biased spool is configured to wind the pliable membrane onto the spool;

5. Enclosure device of claim 3 or 4 wherein the pliable membrane is formed from a mylar, nylon or polyester based material;

6. Enclosure device of any preceding claim wherein the pliable membrane comprises reinforcement material configured to limit deformation of the membrane in a spanwise direction;

7. Enclosure device of any preceding claim wherein the pliable membrane comprises reinforcement elements configured to counteract spanwise bending of the pliable membrane;

8. Enclosure device of any preceding claim wherein the aerodynamic component is a wing leading edge high lift device and the further aerodynamic component is a wing fixed leading edge portion;

9. Enclosure device of any preceding claim wherein the aerodynamic component is a wing fixed trailing edge portion and the further aerodynamic component is a wing trailing edge high lift device;

10. An aerodynamic component comprising an enclosure device according to any preceding claim attached to it;

11. An aerodynamic component according to the preceding claim wherein the first or second distal edge of the pliable membrane is attached to an internal portion of the aerodynamic component and is routed between internal and external portions of the aerodynamic component via an elongate slot;

12. An aerodynamic component according to the preceding claim wherein pliable membrane is supported on a guide with a guide surface configured to reduce friction forces acting on the pliable membrane;

13. An aircraft wing assembly comprising aerodynamic component according to any preceding claim, and a further aerodynamic component, wherein the aerodynamic component is a leading edge high lift device, and the further aerodynamic component is a wing fixed leading edge portion;

14. An aircraft comprising at least one wing assembly according to any preceding claim.

15. Method of counteracting unwanted airflow circulation in a concave surface portion of an aerodynamic component of an aircraft according to any applicable preceding claim, the method comprising the step of
a. providing an aircraft according to preceding claim 14
b. displacing the aerodynamic component relative to the further aerodynamic component from a stowed position to a deployed position(s) in an airflow such that the pliable membrane of the enclosure device transitions from a deformed state to an undeformed state to substantially encloses a concave surface portion of an aerodynamic component of an aircraft wing such that the enclosure devices prevents the development of unwanted airflow circulation within the concave portion when the aerodynamic component is in the deployed position.
